# EUROPÄISCHE PATENTANMELDUNG

(11) **EP 2 060 438 A2**
(43) Veröffentlichungstag der Anmeldung: **20.05.2009**
(21) Anmeldenummer: 08169081.0
(22) Anmeldetag: 13.11.2008
(51) Int. Cl.: B60N 2/68

(54) **Lehne für einen Kraftfahrzeugsitz**

(30) Priorität: 13.11.2007 DE 102007054085
(71) Anmelder: Euromotive GmbH, 5651 Lend (AT)
(72) Erfinder: Garnweidner, Peter, 5112, Lamprechtshausen (AT); Danninger, Christian, 5204, Straßwalchen (AT)
(74) Vertreter: Wilhelms · Kilian & Partner Patentanwälte

(57) **Zusammenfassung**

Gegenstand der Erfindung ist eine Lehne für einen Kraftfahrzeugsitz, welche ein Rahmenelement (1), das die Form der Lehne festlegt, und ein Stabilitätselement (2, 4), das mit dem Rahmenelement verbunden ist, aufweist, wobei das Rahmenelement (1) aus einem einzigen Strangpressprofil gebildet ist und das Stabilitätselement (2) einen vierkantigen Querschnitt aufweist.

## Beschreibung

Die Erfindung betrifft eine Lehne für einen Kraftfahrzeugsitz und insbesondere eine Lehne für einen Kraftfahrzeugsitz eines Sportwagens.

Lehnen für Kraftfahrzeugsitze sind allgemein bekannt und werden in verschiedenen Kraftfahrzeugen, z. B. in Pkws, LKWs, Bussen, Sportwägen etc., verbaut.

Die Rahmenkonstruktion dieser in großen Stückzahlen hergestellten Lehnen besteht normalerweise aus tiefgezogenen Blechteilen, die miteinander verschweißt werden. Hauptsächlich werden derartige Lehnen in Fahrzeugen eingesetzt, die in Großserie hergestellt werden und sind deshalb nicht nach einem im Fertigungsablauf in Bezug auf die Form flexiblen Konstruktionsprinzip, das verschiedene Designs und Funktionen der Lehne ermöglicht, konstruiert.

Dieses unflexible Konstruktionsprinzip mit der einhergehenden schlechten Veränderbarkeit des Designs der Lehne stellt für Fahrzeughersteller, die Fahrzeuge, wie z. B. Sportwägen, in geringen Stückzahlen herstellen, ein Problem dar, weil Käufer derartiger Fahrzeuge, die meistens im obersten Preissegment liegen, erwarten, dass sich das Design im Interieur des Fahrzeuges klar von dem in Großserienfahrzeugen unterscheidet.

Für einen Sportwagenhersteller bedeutet dies, dass er entweder nach dem oben dargestellten unflexiblen Konstruktionsprinzip der auf dem Markt befindlichen Lehnen unter hohem Kostenaufwand eine Lehne für das exklusive Interieur eines Sportwagens in Kleinserie konstruiert, obwohl ihm bekannt ist, dass die Lehne nur in geringen Stückzahlen benötigt wird und der Fertigungsablauf nur schlecht auf ein anderes Modell umgestellt werden kann, oder sich an auf dem Markt vorhandenen Sitz- bzw. Lehnenstrukturen orientiert.

Ein weiteres mögliches Konstruktionsprinzip einer Lehne ist aus US 6,926,358 B2 bekannt, bei dem ein die Stabilität festlegendes Rahmenelement an einem Lehnenneigungsversteller befestigt wird. Mit diesem die Stabilität festlegenden Rahmenelement wird ein weiteres Rahmenelement verbunden, das die Kontur der Lehne festlegt. Nachteil dieses Konstruktionsprinzips ist, dass das die Stabilität der Lehne festlegende Rahmenelement aus einem sehr massiven tiefgezogenen Blechteil ausgeführt werden muss, um die während der Fahrt oder bei einem Unfall auftretenden Kräfte aufnehmen zu können. Das die Stabilität festlegende Rahmenelement verläuft ausgehend von dem Lehnenneigungsversteller bis in den Kopfbereich der Lehne, weshalb ein Sportwagenhersteller in seinen das Design betreffenden Freiheiten eingeschränkt wird.

Es ist daher Aufgabe der Erfindung, eine Lehne mit einem Konstruktionsprinzip, welches mit geringen fertigungstechnischen Änderungen zu anderen Geometrien der Lehne führt, zu schaffen.

Diese Aufgabe wird durch eine Lehne mit den Merkmalen des Patentanspruchs 1 gelöst.

Bevorzugte Ausgestaltungen dieser Lehne sind Gegenstand der Unteransprüche.

Grundprinzip der Erfindung ist es, dass ein formgebendes Rahmenelement der Lehne aus einem einzigen Strangpressprofil gebildet ist, das in die gewünschte Form gebogen und mit Stabilitätselementen, die einen rechteckigen Querschnitt aufweisen, zur Erhöhung der Steifigkeit der Lehnenstruktur versehen wird.

Vorteilhaft bei der erfindungsgemäßen Lehne ist, dass verschiedene Geometrien, d. h. Designs, der Lehne ermöglicht werden, ohne die Abfolge der Fertigungsschritte der Lehne in irgendeiner Art und Weise ändern zu müssen. Werden z. B. verschiedene Lehnenkonturen für verschiedene Fahrzeugmodelle benötigt, müssen lediglich Parameter in dem Biegeverfahren des Strangpressprofils, das vorzugsweise mit einer CNC-Steuerung durchgeführt wird, zur Erlangung verschiedener Konturen geändert werden.

Darüber hinaus können die Fügestellen der zur Herstellung dieser Lehnenstruktur angewandten Fügeverfahren leicht über programmierbare Steuerungen in einem automatisierten Prozess in ihrer Position und Ausführung verändert werden.

Weiterhin vorteilhaft ist bei diesem Konstruktionsprinzip der Lehne die Wahlmöglichkeit der Verbindungsstellen der einzelnen Konstruktionselemente, weil diese an Positionen angeordnet werden können, die wenig beansprucht werden.

Durch diese leicht wählbaren Konstruktionsbedingungen kann eine Lehne mit einem Konstruktionsprinzip geschaffen werden, das auf einfache Weise verschiedene Konturen der Lehne, ohne hohe Kosten bei der Umstellung des Fertigungsablaufes für diese verschiedenen Konturen zu erzeugen, ermöglicht. Ein stark von der Großserie abweichendes Design ist hierdurch erreichbar.

Im Folgenden wird eine bevorzugte Ausführungsform der erfindungsgemäßen Lehne unter Bezug auf die beigefügten Zeichnungen erläutert, wobei
Fig. 1 eine perspektivische Ansicht der erfindungsgemäßen Lehnenstruktur,

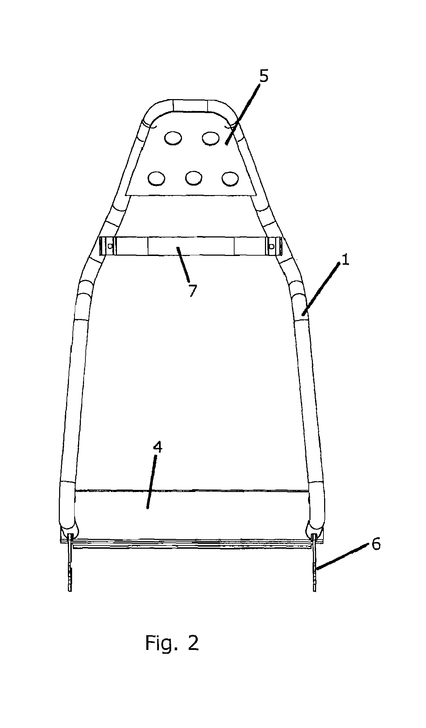

Fig. 2 eine erfindungsgemäße Lehne mit einer unterschiedlichen Kontur,
Fig. 3 eine weitere Lehne mit einer unterschiedlichen Kontur,
Fig. 4 die Lehne aus Fig. 1 mit Schnittlinien der in den folgenden Figuren dargestellten Schnittansichten,
Fig. 5 eine Schnittansicht entlang der Schnittlinie A-A aus Fig. 4,
Fig. 6 eine Schnittansicht der Lehnenstruktur entlang der Schnittlinie B-B aus Fig. 4, und
Fig. 7 eine Schnittansicht der Lehnenstruktur entlang der Schnittlinie C-C aus Fig. 4 zeigt.

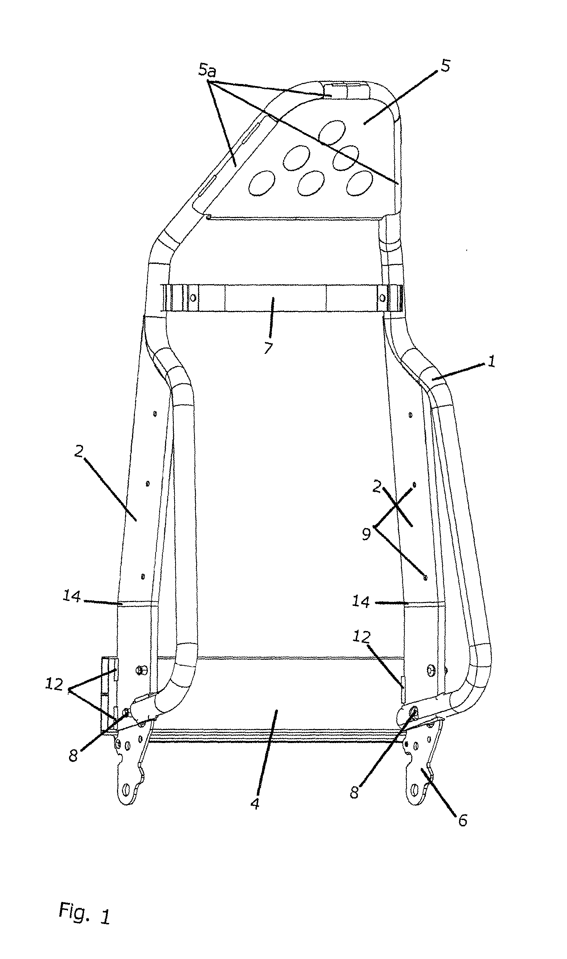

In Fig. 1 ist eine perspektivische Ansicht einer erfindungsgemäßen Kraftfahrzeugsitzlehne für einen Sportwagen, die nach dem im Folgenden erläuterten Konstruktionsprinzip aufgebaut ist, dargestellt. Obwohl die im Folgenden erläuterte Lehne für einen Sportwagen konzipiert ist, ist dies nicht einschränkend zu verstehen. Das Konstruktionsprinzip kann für Lehnen anderer Fahrzeuge ebenfalls verwendet werden. Hauptelement der Konstruktion ist das Rahmenelement 1, das die umlaufende Kontur der Lehne festlegt. Dieses Rahmenelement kann aus einem beliebigen Metall, wie z. B. Aluminium, oder aus einer Legierung z. B. einer Aluminiumlegierung, Stahl, bestehen. Biegefähige Kunststoffe, die die benötigte Steifigkeit aufweisen, sind auch verwendbar. Dieses Rahmenelement 1 wird aus einem Strangpressprofil vorzugsweise mit einem kreis- bzw. rohrförmigen Querschnitt, das an bestimmten Stellen gebogen wird, gebildet. Es sei aber erwähnt, dass dieses Rahmenelement andere Querschnittsformen und -maße mit sich änderndem Durchmesser aufweisen kann.

Die Verwendung eines einzigen Strangpressprofils mit einheitlichem Querschnitt ist aber in der Weise vorteilhaft, dass es fertigungsbedingt gleiche oder zumindest ähnliche Biegeradien aufweist und unterschiedliche Lehnenkonturen auf der gleichen Biegeanlage, z. B. einer CNC-gesteuerten Biegeanlage, nur unter Veränderung der Biegeparameter und ohne Zusatzkosten hergestellt werden können. Wie aus Fig. 1 ersichtlich, ist der obere Abschnitt im Kopfbereich der Lehnenkonstruktion nur aus dem Rahmenelement 1 gebildet, wodurch der obere Bereich sehr dünn gestaltet werden kann, was zu einer sportlichen Optik oder Rennoptik der Lehne führt. Außerdem kann das Rahmenelement 1 im unteren Brust- und/oder Beckenbereich derart gebogen werden, dass es die Funktion des Seitenhalts für den Fahrer, der einen Sportwagen steuert, auf den unter Umständen in Kurven hohe Kräfte wirken können, übernimmt. Je nach gewünschter Optik der Lehne, d. h. extrem oder dezent sportlich, kann der Seitenhalt entsprechend ausgebildet und geformt werden.

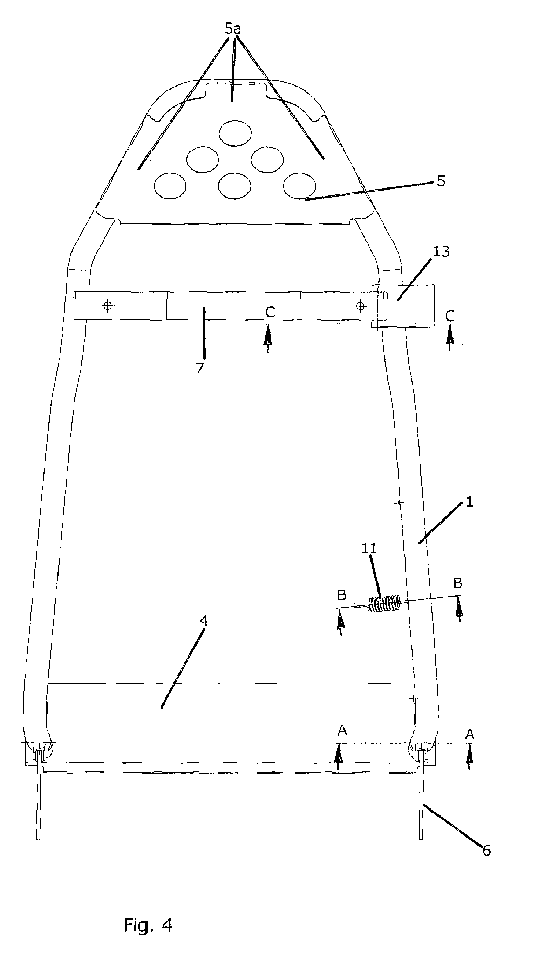

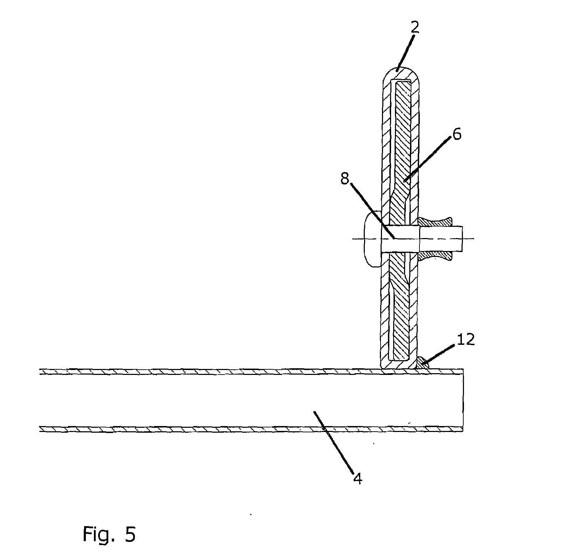

Zu Erhöhung der Steifigkeit der Lehnenkonstruktion sind zwei Stabilitätselemente 2 auf jeder Längsseite der Lehne vorgesehen. In Fig. 4 ist die Lehne aus Fig. 1 von vorne dargestellt, wobei in Fig. 4 zusätzlich die Schnittlinien der Schnittansichten aus Fig. 5, 6 und 7 gezeigt sind. Wie aus Fig. 5, die die Schnittansicht entlang der Schnittlinie A-A aus Fig. 4 zeigt, ersichtlich, weist das Stabilitätselement 2 einen im Wesentlichen rechteckigen Querschnitt auf, dessen schmale Längsseite in Fahrtrichtung des Fahrzeuges zeigt. Diese Stabilitätselemente 2, im Folgenden als Seitenwangen bezeichnet, sind an ihrem unteren Ende, wie in Fig. 1 gut dargestellt, mit dem Rahmenelement 1 durch Verbindungselemente 8 in Form von Schrauben oder Nieten verbunden. Hierfür weisen beide Enden des Rahmenelementes 1 einen geschlitzten Abschnitt auf, in den die Seitenwange 2 eingesetzt werden kann, wobei zur Befestigung sowohl die Seitenwange 2 als auch das Rahmenelement 1 eine Bohrung für einen Einsatz eines Nieten oder einer Schraube aufweist. Das Rahmenelement 1 und die Seitenwangen 2 können aber auch mittels eines anderen Verbindungsverfahrens, wie z.B. Schweißen, miteinander verbunden werden.

Das obere Ende der Seitenwangen 2 ist ebenfalls mit einem Abschnitt des Rahmenelementes 1 verbunden, wobei die Verbindung des oberen Endes der Seitenwangen 2 mit dem Rahmenelement 1 an einem möglichst weit oben liegenden Abschnitt gewählt werden sollte, da die Biegefestigkeit der Lehne proportional zur Lehnenhöhe abnimmt. Je höher diese Verbindung vorgesehen wird, desto kleinere Querschnitte des Strangpressprofils des Rahmenelementes 1 können gewählt werden, was zu einer Einsparung an Gewicht, Kosten und Material führt. Zur Verbindung des oberen Abschnittes der Seitenwangen 2 mit dem Rahmenelement 1 sind wiederum verschiedene Fügeverfahren, wie Schweißen, Schraubverbindungen etc., denkbar. Der Abschnitt des Rahmenelementes 1, an dem das obere Ende der Seitenwangen befestigt wird, befindet sich bevorzugt kurz unterhalb des Bereiches der Lehne, welcher der Schulter eines Fahrgastes entspricht. Genauer bedeutet dies, dass der Abschnitt, an dem das obere Ende der Seitenwangen 2 mit dem Rahmenelement 1 verbunden wird, bevorzugt in Bereichen zwischen 50 % und 75 %, 50 % und 65 %, 60 % und 85 % oder 65 % und 80 % der Gesamtlänge der Lehne, gemessen von dem unteren Ende der Lehne, das an eine Sitzfläche anschließt, liegt.

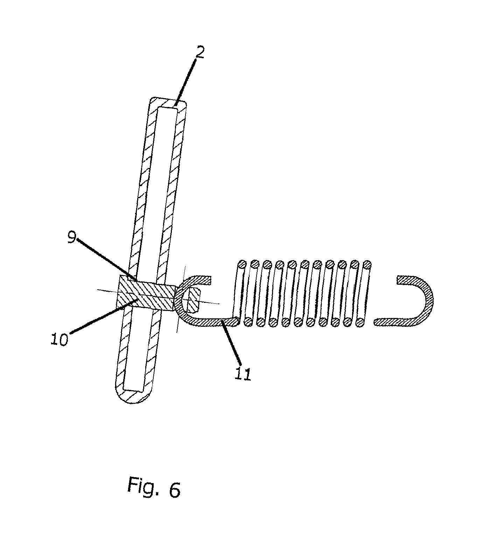

Wie in Fig. 1 und 5 gezeigt, besitzen die Seitenwangen 2 einen im Wesentlichen rechteckigen Querschnitt, dessen schmale Seite in Fahrtrichtung des Fahrzeuges zeigt. Nachdem die Dimensionierung der schmalen Längsseite der Seitenwangen 2 bei der Berechnung der Biegesteifigkeit kubisch eingeht, sind die mit dem Rahmenelement 1 verbundenen Seitenwangen 2 für die Aufnahme von Kräften in Fahrtrichtung, z. B. bei der Beschleunigung oder Verzögerung des Fahrzeuges, von Bedeutung. Der Querschnitt der Seitenwangen kann auch ein Vierkant sein. Wichtig ist, dass die Seitenwangen dem Rahmenelement hinreichend Biegefestigkeit gegenüber in Längsrichtung des Fahrzeuges auftretende Kräfte verleihen. Die Seitenwangen 2 können z. B. als Strangpressprofil oder als Blechbiegeteil ausgeführt sein und können darüber hinaus Befestigungsmöglichkeiten, die zur Befestigung einer Drahtmatte oder eines Seitenairbags dienen können, aufweisen. In Fig. 6, der Schnittansicht entlang der Schnittlinie B-B aus Fig. 4, ist eine Befestigungsmöglichkeit einer Drahtmatte beispielhaft dargestellt. Hierfür wird durch in den Seitenwangen gebildete Durchgangslöcher 9 ein Hakensystem 10 geführt, in das die Drahtmatte über eine Feder 11 eingehängt werden kann. Wie oben schon erwähnt, können aber auch Befestigungsmöglichkeiten für einen Seitenairbag an den Seitenwangen 2 vorgesehen sein.

Als weiteres Stabilitätselement ist am unteren Ende der Lehnenkonstruktion ein Querträger 4 als Querverbindung zur Erhöhung der Verwindungssteifigkeit der Lehne an den mit dem Rahmenelement 1 verbundenen Seitenwangen 2 befestigt. Dieser Querträger 4 kann ebenfalls ein Strangpressprofil sein und ist, wie in Fig. 1 und 5 gezeigt, mit dem hinteren Längsabschnitt der Seitenwangen 2 an den Schweißstellen 12 verschweißt. Die Verbindung des Querträgers 4 mit den Seitenwangen 2 muss keine Schweißverbindung sein, sondern kann ebenfalls durch andere Verbindungsverfahren bewerkstelligt werden.

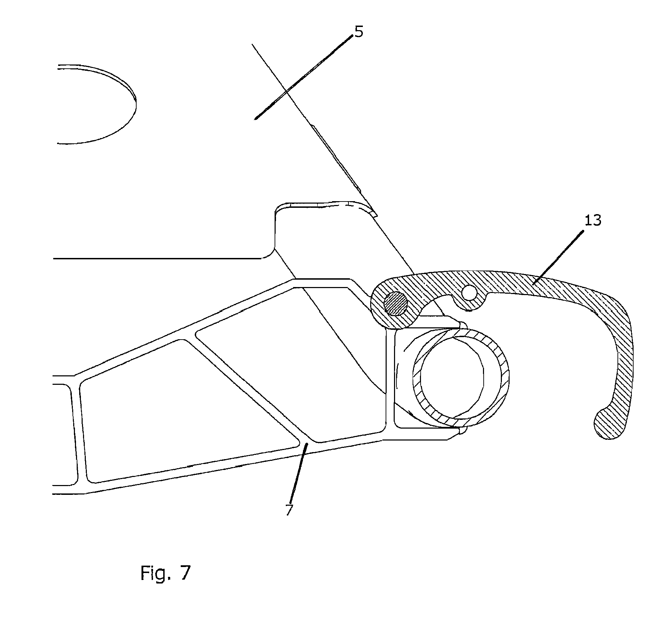

Neben diesem Querträger 4 kann an einem oberen Abschnitt der Lehnenkonstruktion ein weiterer Querträger 7 zur Aufnahme seitlicher Kräfte mit dem Rahmenelement 1 verbunden werden. Die Schnittansicht entlang der in Fig. 4 dargestellten Schnittlinie C-C ist in Fig. 7 gezeigt, in der der Querträger 7 als ein Mehrkammer-Strangpressprofil zur Reduzierung von Gewicht erkennbar ist. Dieser Querträger 7 liegt mit seinen Enden an dem Außenumfang des rohrförmigen Rahmenelementes 1 an und wird mit diesem an einer gewünschten Stelle verschweißt. Es ist aber ersichtlich, dass wiederum jedes andere Verbindungsverfahren ebenfalls zur Anwendung kommen kann.

Darüber hinaus ist an dem Querträger 7, wie in Fig. 4 und 7 gezeigt, ein Entriegelungshebel 13, der ebenfalls aus einem Strangpressprofil gebildet ist, für ein Entriegeln und Kippen der Lehne nach vorne angebracht. Dieser Entriegelungshebel 13 ist in den anderen Figuren nicht dargestellt und kann je nach gewünschter Funktion der Lehne optional montiert werden.

Im Kopfstützenbereich der Lehne kann eine Prallplatte 5 zur Abstützung des Kopfes im Fall eines Unfalls oder bei starker Beschleunigung vorgesehen werden, die den oberen Bereich des Rahmenelementes 1 vollständig bedeckt. Zur Befestigung dieser Prallplatte 5 ist diese mit die Außenkontur des Rahmenelementes 1 aufweisenden Abschnitten 5a versehen, die mit der Außenoberfläche des Rahmenelementes 1, z.B. durch Schweißen oder ein beliebiges anderes Verfahren, verbunden werden.

Zur Verbindung der gesamten Lehnenkonstruktion mit einem Sitzabschnitt werden Verbindungselemente 6 von unten in die Seitenwangen 2 eingeführt, die ein dem Verbindungselement 8 der Seitenwange 2 mit dem Rahmenelement 1 entsprechendes Durchgangsloch aufweisen, durch das das Verbindungselement 8, wie in der Schnittansicht in Fig. 5 gezeigt, hindurchläuft und folglich das Verbindungselement 6 fest mit der Lehnenkonstruktion verbindet. Durch die Einführung des Verbindungselementes 6, das ein Teil des Lehnenneigungsverstellers bildet, in die Seitenwangen 2 werden die auf die Lehne ausgeübten Kräfte über die Seitenwangen und das Verbindungselement 6 in den Sitzabschnitt bzw. in die Verbindungsschienen zur Verbindung des gesamten Sitzes mit dem Fahrzeug eingeleitet.

Als Material für die oben erläuterten Konstruktionselemente, d.h. das Rahmenelement 1, die Seitenwangen 2, die Querträger 4, 7, die Prallplatte 5 und die Verbindungselemente 6, kann ein beliebiges Metall, vorzugsweise Aluminium oder eine Aluminiumlegierung für eine Gewichtsreduzierung, andere Metalllegierungen oder auch biegefähige Kunststoffe mit der benötigten Steifigkeit verwendet werden.

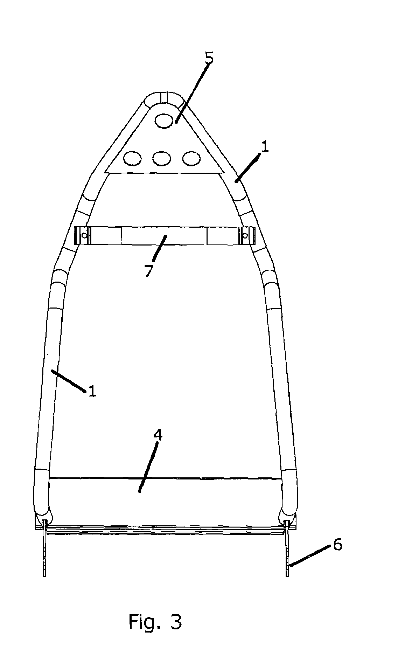

In Fig. 3 ist eine weitere erfindungsgemäße Lehnenkonstruktion gezeigt, die einen unterschiedlichen Kopfstützenabschnitt aufweist. Diese unterschiedliche Kontur der Lehne kann, wie aus dem oben Dargestellten leicht verständlich, nur durch Veränderung der Biegestellen des Rahmenelementes 1 in Bezug auf Maß und Ort geformt werden. Die Anzahl der Fertigungsschritte ist mit der Anzahl der Fertigungsschritte der vorherigen Lehne gleich, obwohl doch deutliche Unterschiede in der Kontur ersichtlich sind.

Fig. 4 zeigt wiederum eine weitere Lehne mit einer unterschiedlichen Kontur, die mit der gleichen Anzahl von Fertigungsschritten hergestellt werden kann, da wiederum lediglich die Biegestellen des Rahmenelementes 1 für die gewünschte Kontur verändert werden müssen.

Die im Vorherigen dargestellten und erläuterten Lehnen sind alle mit den gleichen Seitenwangen 2 aufgebaut worden, was zur Folge hat, dass die Verläufe der Lehnenkonturen im unteren Abschnitt ähnlich sind. Sollten auch im unteren Abschnitt stark voneinander abweichende Verläufe gewünscht sein, müssen lediglich die Seitenwangen 2 konstruktiv verändert werden, d. h. zum Beispiel, dass die in Fig. 1 gezeigten Biegestellen 14 in Bezug auf Lage und Maß geändert werden.

Im Folgenden wir ein Verfahren zur Herstellung einer erfindungsgemäßen Lehne mit dem oben beschriebenen Konstruktionsprinzip erläutert. In einem ersten Schritt des Verfahrens wird der Verlauf der Kontur der Lehne festgelegt und ein Strangpressprofil, das einen einheitlichen Querschnitt aufweist, in den gewünschten Konturverlauf der Lehne gebogen. Vorzugsweise wird dieses Biegeverfahren auf einer computergesteuerten CNC-Biegeanlage durchgeführt, die variabel verschiedene Verläufe der Kontur der Lehne, d. h. des Strangpressprofils, ermöglicht.

In einem zweiten Schritt des Verfahrens zur Herstellung der Lehne wird das gebogene Strangpressprofil mit Stabilitätselementen in Form der vorher erläuterten Seitenwangen 2 und Querstreben 4, 7, versehen. In einem letzten Verfahrensschritt wird die Lehne mit Verbindungselementen 6 derart ausgestattet, dass diese mit den Seitenwangen 2 verbunden werden.

Aus dem oben Dargestellten wird offensichtlich, dass eine Lehne eines Kraftfahrzeugsitzes mit einem Konstruktionsprinzip und ein Verfahren zur Herstellung einer Lehne eines Kraftfahrzeugsitzes geschaffen werden können, bei denen eine Veränderung des Designs der Lehne keine gravierenden Änderungen des Fertigungsablaufes, die zu erhöhten Kosten führen, nach sich zieht.

Darüber hinaus ermöglicht das Konstruktionsprinzip der Lehne nicht nur variable Verläufe der Lehnenkontur, sondern erfüllt auch geforderte Sicherheitsanforderungen, wie z. B. den Ladeguttest nach DIN 75410-2, Ausgabe 2005-11. Bei diesem Test werden Prüfkörper im Kofferraum eines Fahrzeuges angeordnet, die bei einer starken Verzögerung jeweils einen Holm, d. h. jeweils eine Seitenwange 2 der nebeneinander angeordneten Lehnen treffen. Bei diesem Aufprall werden Kräfte asymmetrisch zu der Lehnenstruktur auf die Lehnen ausgeübt, die aufgrund dieses Konstruktionsprinzips gut auf die jeweilige andere Seitenwange 2 der Lehne übertragen werden, wodurch massive Querschnitte der konstruktiven Elemente und damit einhergehende höhere Reaktionskräfte zu den Sitzschienen und zum Fahrzeugboden hin vermieden werden.

## Patentansprüche

1. Lehne für einen Kraftfahrzeugsitz, welche ein Rahmenelement (1), das die Form der Lehne festlegt, und ein Stabilitätselement (2, 4), das mit dem Rahmenelement verbunden ist, aufweist,
wobei das Rahmenelement (1) aus einem einzigen Strangpressprofil gebildet ist
und das Stabilitätselement (2) einen vierkantigen Querschnitt aufweist.

2. Lehne für einen Kraftfahrzeugsitz, wobei das Stabilitätselement (2) einen rechteckigen Querschnitt aufweist.

3. Lehne gemäß Anspruch 2, wobei das Stabilitätselement (2) derart mit dem Rahmenelement (1) verbunden ist, dass die lange Seite des rechteckigen Querschnittes sich senkrecht zur Breite der Lehne erstreckt.

4. Lehne gemäß einem der vorhergehenden Ansprüche, wobei zwei Stabilitätselemente (2) mit einem rechteckigen Querschnitt jeweils auf einer Längsseite der Lehne vorgesehen sind.

5. Lehne gemäß einem der vorhergehenden Ansprüche, wobei die Stabilitätselemente (2) zwei rechteckige Strangpressprofile sind.

6. Lehne gemäß einem der vorhergehenden Ansprüche, wobei eine Querstrebe (4) zur Erhöhung der Steifigkeit an einem unteren Ende der Lehne vorgesehen ist.

7. Lehne gemäß Anspruch 6, wobei die Querstrebe (4) ein Strangpressprofil ist.

8. Lehne gemäß einem der vorhergehenden Ansprüche, wobei eine weitere Querstrebe (7) zur Erhöhung der Steifigkeit in einem oberen Abschnitt der Lehne vorgesehen ist.

9. Lehne gemäß einem der vorhergehenden Ansprüche, wobei im Kopfbereich der Lehne ein Prallelement (5) zur Abstützung des Kopfes des Benutzers des Fahrzeugsitzes vorgesehen ist.

10. Lehne gemäß einem der vorhergehenden Ansprüche, wobei die Lehne Verbindungselemente (6) umfasst, die zur Verbindung der Lehne mit einem Sitzabschnitt vorgesehen sind.

11. Lehne gemäß einem der vorhergehenden Ansprüche, wobei das Rahmenelement (1) an beiden Enden einen geschlitzten Abschnitt aufweist, in die die Stabilitätselemente (2) eingesetzt und mit dem Rahmenelement (1) verbunden sind.

12. Lehne gemäß einem der vorhergehenden Ansprüche, wobei die Verbindungselemente (6) in die Stabilitätselemente eingeführt sind und das Rahmenelement (1), das entsprechende Stabilitätselement (2) und das entsprechende Verbindungselement (6) über eine Schraube oder einen Nieten (8) verbunden sind.

13. Lehne gemäß einem der vorhergehenden Ansprüche, wobei die Stabilitätselemente (2) Befestigungsvorrichtungen für einen Seitenairbag oder eine Drahtmatte aufweisen.

14. Lehne gemäß einem der vorhergehenden Ansprüche, wobei das Rahmenelement (1) gleiche Biegeradien aufweist.
